Europäisches Patentamt

European Patent Office

Office européen des brevets

(11) Publication number: **0 091 643**
**B1**

## (12) EUROPEAN PATENT SPECIFICATION

(45) Date of publication of patent specification: **23.07.86**

(21) Application number: **83103314.7**

(22) Date of filing: **05.04.83**

(51) Int. Cl.⁴: **F 24 F 7/08, F 24 F 1/02, F 24 F 3/00, F 24 F 11/00, F 24 F 3/06, F 24 F 7/00**

(54) **Air conditioning apparatus.**

(30) Priority: **05.04.82 JP 56348/82**

(43) Date of publication of application:
**19.10.83 Bulletin 83/42**

(45) Publication of the grant of the patent:
**23.07.86 Bulletin 86/30**

(84) Designated Contracting States:
**DE FR GB**

(56) References cited:
**EP-A-0 029 573**
**EP-A-0 044 560**
**DE-A-1 939 147**
**DE-B-2 248 549**
**GB-A-1 498 621**
**US-A-4 042 018**

(73) Proprietor: **Matsushita Electric Industrial Co., Ltd.**
**1006, Oaza Kadoma**
**Kadoma-shi Osaka-fu, 571 (JP)**

(72) Inventor: **Yano, Nobuyuki**
**21-18, Inda-cho**
**Hirakata-shi Osaka-fu (JP)**
Inventor: **Kodera, Takuro**
**3-191, Hagiharadai-Nishi**
**Kawanishi-shi Hyogo-ken (JP)**
Inventor: **Aoki, Akira**
**6-7-103, Narita-cho**
**Neyagawa-shi Osaka-fu (JP)**
Inventor: **Utagawa, Toshio**
**7-4-3, Korigaoka**
**Hirakata-shi Osaka-fu (JP)**

(74) Representative: **Eisenführ & Speiser**
**Martinistrasse 24**
**D-2800 Bremen 1 (DE)**

Courier Press, Leamington Spa, England.

## Description

### Background of the invention

The present invention relates to an air conditioning apparatus comprising a box body containing an indoor-air circulation wind-passage provided with an indoor heat exchanger and a blower for circulating the indoor-air, and an outdoor-air circulation wind-passage provided with an outdoor heat exchanger and a blower for circulating the outdoor-air.

An air conditioning apparatus of the above identified type is known from DE—B—22 48 549. The known air conditioning apparatus of the heat exchanger type comprises a box body having an evaporator arranged in an indoor-air circulation wind-passage and blower for circulating the indoor-air, an outdoor-air circulation wind-passage provided with an outdoor heat exchanger in the form of a condenser and a blower for circulating the outdoor-air. Furthermore a compressor is provided in an intermediate wind-passage whereby both the outdoor-air circulation wind-passage and the intermediate wind-passage are arranged outside the room to be tempered.

EP—A—0029573 discloses a heat exchanger comprising an indoor-air circulation wind-passage and an outdoor-air circulation wind-passage which are divided by a ventilation wind-passage to which ventilated air may flow in parallel to the ventilated air flowing through the indoor-air circulation wind-passage or the outdoor-air circulation wind-passage controlled by flaps at the inlet of the ventilation wind-passage.

An air ventilation apparatus is disclosed in EP—A—0044560 having a first ventilation wind-passage for fresh air comprising an outdoor-inlet opening and an indoor-outlet opening for fresh air and a second ventilation wind-passage having an inlet wind-opening and an outlet wind-opening. The second ventilation wind-passage further comprises a heat exchanger for transferring heat from the second ventilation wind-passage to the first ventilation wind-passage.

Most of the conventional heat-pump air conditioners are air conditioners for exclusive use for instance for a ventilation function or for heating and cooling functions. In case of a ventilation function the energy losses caused by the ventilation are unavoidable. As ventilation fans adapted to reduce the ventilation losses, some air-conditioning ventilation fans use total heat exchangers, but are not provided with a cooling and heating function.

The conventional heat-pump air conditioners of a wind type of the conventional air-conditioning ventilation fans thereof which are of non-heat-exchange and are not provided with a ventilation function, have a disadvantage in that the energy-saving open-air cooling operation as in the wind fan cannot be effected in the nights of the summer when the outdoor temperature has become lower than the indoor temperature.

### Summary of the invention

It is an object of the present invention to provide an air conditioning apparatus having a cooling, heating, ventilating and total heat exchange ventilating function which saves energy and which may be used throughout the year ensuring little energy losses.

According to the present invention the air conditioning apparatus of the above identified type is characterized by a ventilation wind-passage comprising an indoor-air exhaust wind-passage and an outdoor-air feed wind-passage, a heat exchanger of opposite flow type which has a first surface facing indoor-air circulation wind-passage, a second surface facing the outdoor-air circulation wind-passage and on each of the surfaces two wind-passage openings are provided at the intersection of the ventilation wind-passages, one end of said indoor-air exhaust wind-passage and one end of said outdoor-air feed wind-passage being conected via said heat exchanger of opposite flow type and said wind-passage openings to the middle portions of said indoor-air circulation wind-passage and said outdoor-air circulation wind-passage, respectively, and dampers to open or shut said wind-passage openings.

An advantageous embodiment of the above described air conditioning apparatus is characterized in that said dampers are adapted to function, respectively, as suction-direction controlling plates for the indoor-air circulating fan and the outdoor-air circulating fan.

Furthermore, both of said indoor heat exchanger and outdoor heat exchanger may form part of a heat pump.

### Brief description of the drawings

These and other objects and features of the present invention will become apparent from the following description taken in conjunction with preferred embodiments thereof with reference to the accompanying drawings, in which:

Figs. 1, 4, 5, 6 are cross-sectional views, seen from above, in one embodiment, of a heat-pump air conditioner of the present invention, repetively showing the flows of air currents during the cooling, heating operations during the partial total-heat exchange ventilating operation in the cooling, heating operations, during the total-heat-exchange ventilating operation, during the simultaneous feed, exhaust ventilating operation with non-heat-recovery;

Fig. 2 is a schematic cross-sectional view of the heat-pump air conditioner of the present invention; and

Fig. 3 is a partial appearance view of a total heat exchanger used in the heat-pump air conditioner of the present invention.

### Detailed description of the invention

Before the description of the present invention proceeds, it is to be noted that like parts are designated by like reference numerals throughout the several views of the accompanying drawings.

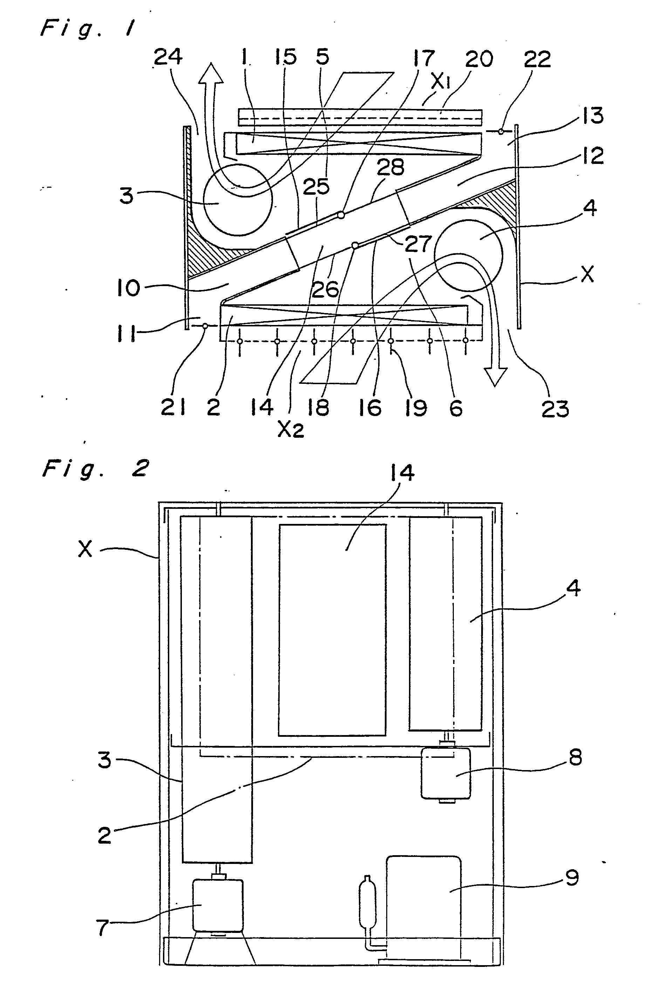

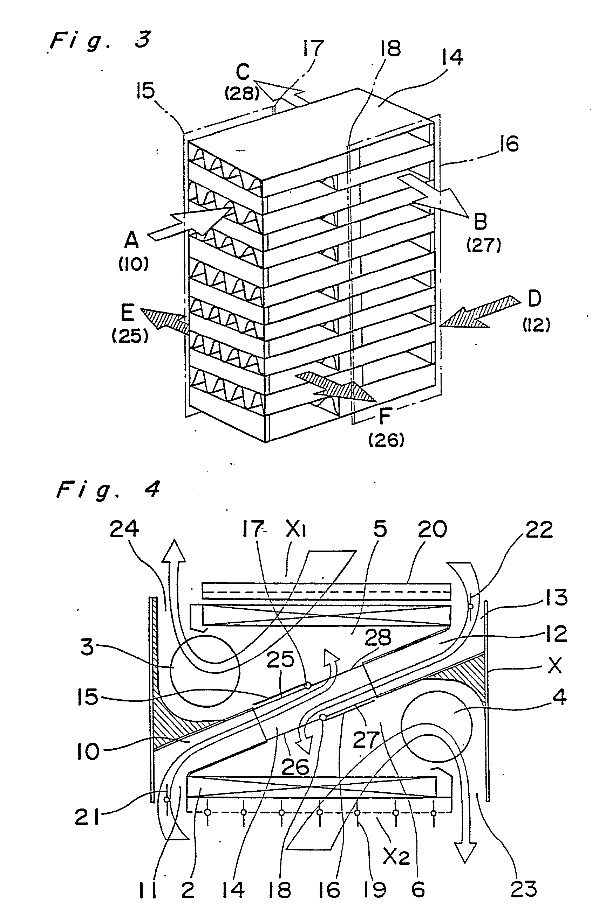

Referring to Figs. 1 to 3, within a box body X of an air conditioning apparatus in one embodiment of the present invention, there provide in blocks an indoor-air circulation wind-passage 6, an outdoor-air circulation wind-passage 5, a ventilation wind-passage composed of an indoor-air exhaust wind passage 10 and an outdoor-air feed wind-passage 12, and a total heat exchanger 14 of opposite flow type disposed between said indoor-air exhaust wind passage 10 and outdoor-air feed wind-passage 12, one end of said outdoor-air feed wind-passage 12 being opened, through said total heat exchanger 14, to the middle portions of said indoor-air circulation wind-passage 6 and said outdoor-air circulation wind-passage 5, one end of the indoor-air exhaust wind passage 10 being opened, through the same heat exchanger 14, to the middle portions of said indoor-air circulation wind-passage 6 and said outdoor-air circulation wind-passage 5. Also, an outdoor heat-exchanger 1 of a heat pump is provided within one opening X1 of the box body X to be disposed in said outdoor-air circulation wind passage 5, while an indoor heat-exchanger 2 of the heat pump is provided within the other opening X2 of the box body X to be disposed in said indoor-air circulation wind passage 6. Cross-flow fans 3 and 4 are provided respectively in the outdoor-air circulation wind passage 5 and indoor-air circulation wind passage 6 as blowers for circulating the outdoor air and the indoor air. Within the outdoor-air circulation wind passage 5 an out-door air is circulated by the fan 3 driven by a fan motor 7 from the outside of the atmosphere to an exhaust port 24 disposed in the opening of the box body X toward the outside of the atmosphere through the outdoor heat-exchanger 1. Also, within the indoor-air circulation wind passage 6 indoor air is circulated by the fan 4 driven by a fan motor 8 from the inside of a room to an exhaust port 23 disposed in the opening X2 of the body X toward the inside of the room through the outdoor heat exchanger 2. In addition, there provide a compressor 9 for the heat pump within the box body X, shutters 19 and 20 disposed in the openings of the box body X on the front faces of the indoor heat exchanger 2 and the outdoor heat exchanger 1, outer dampers 21 and 22 which open or shut an indoor air inlet port 11 disposed at the other end of the indoor-air exhaust wind-passage 10 and an outdoor-air inlet port 13 disposed at the other end of the outdoor-air feed wind-passage 12, inner dampers 15 and 16 which are adapted to rotate around shafts 17 and 18 to open or shut passages of the total heat exchanger 14 installed between the wind passages 10, 12, as mentioned below. The total heat exchanger 14 installed at the intersection of the wind passages 10, 12 has dashboards, spacing boards made of kraft paper built up into a laminated layer as shown in Fig. 3. Referring to Fig. 3, an A air-current and a D air-current which have entered the total heat exchanger 14 from the mutually opposite faces disposed toward said indoor-air exhaust wind-passage 10 and said outdoor-air feed wind-passage 12 are heat-exchanged in opposite air currents. Thereafter, they are distributed into two pairs of outlets 25 to 28 each pair disposed in the right and left faces towards said indoor-air circulation wind-passage 6 and said outdoor-air circulation wind-passage 5 to respectively form a B air-current and a C air-current, an E air-current and a F air-current thereby to get the respective air currents to go out of the total heat exchanger 14. The total heat exchanger 14 is provided with such wind passages as to allow the air currents to flow as described hereinabove. One of the air-current outlets of the total heat exchanger 14 is normally closed by said inner dampers 15 and 16 as shown in Fig. 1 to prevent the feed air-currents of the outdoor air from passing into the wind passage 5 for circulating the outdoor air, or the exhaust currents of the indoor air from passing into the wind passage 6 for circulating the indoor air. During the simultaneous feed, exhaust ventilating operation, the dampers 15, 16 are opended as shown in Fig. 6 to short-circuit the wind passage 5 for circulating the outdoor air and the wind passage 6 for circulating the indoor air through the total heat exchanger 14 and to change the air-current sucking direction of the cross-flow fans 3, 4. Thus, the air currents, which entered the wind passage 6 for circulating the indoor air from the indoor, can be introduced outdoors by the blower 3, while the air-currents, which entered the wind passage 5 for circulating the outdoor air from the outdoor can be introduced indoors by the blower 4, thus allowing the ventilation to be performed.

The operation of each unit and the condition of the air current flows in operation modes where the various functions are performed in a wind type heat-pump air conditioner of such characters as described hereinabove will be described hereinafter with reference to the Figs. 1, 4, 5, 6.

Fig. 1 shows the flows of the air currents and the operation of each unit during the cooling, heating operation. The heat pump is operated with dampers 15, 16 and 21, 22 being shut, and shutters 19, 20 being open. The airs flow by the fans 3, 4 from the shutters 19, 20 to the exhaust ports 23, 24 through the heat pump.

Fig. 4 shows the flows of the air currents and the condition of each unit in a case where the total heat exchange ventilation is partially mixed during the air cooling, heating operation. The dampers 21, 22 are opened from the condition of Fig. 1, to suck the indoor air and the outdoor air from the inlet ports 11, 13 by the blowers 3, 4. The total heat exchange of the air is performed within the total heat exchanger 14. In addition of the air currents of Fig. 1, air flows from the dampers 21, 22 to the exhaust ports 23, 24 through the total heat exchanger 14. Thereafter, the air is mixed with the outdoor circulation air and the indoor circulation air. In this case, the ratio of the ventilation air-amount with respect to the total air-amount of the indoor blow-off can be remotely controlled by the regulation of the opening, shutting degrees of the shutters 19, 20.

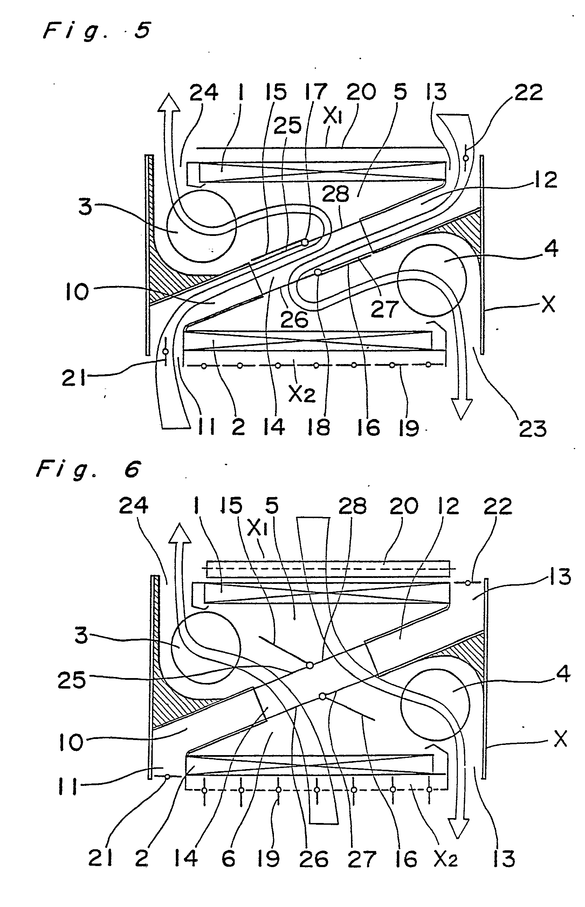

Fig. 5 shows the flows of the air-currents and the condition of each unit during the total heat exchange ventilation. Stop the compressor 9, open the dampers 21, 22, shut the dampers 15, 16 and shut the shutters 19, 20. In this case, outdoor air is sucked by the blower 4, and is inhaled from the outdoor-air inlet port 13. It passes into the outdoor-air feed wind-passage 12 and is exchanged in total heat, for the exhaust air from the interior of the room, within the total heat exchanger 14 so as to be fed the indoors. Similarly, the exhaust air from the indoor is sucked by the blower 3. It passes into the indoor-air inlet port 11, the indoor-air exhaust wind-passage 10 and is exchanged in total heat, for the feed air from the outdoor, within the total heat exchanger 14 so as to be exhausted outdoors. The functions are completely the same as those of the ordinary air condition ventilating fans. The total heat exchange ventilation with reduced loss of the heat energy can be performed.

It is to be noted that the ventilation air-amount is 2 m$^3$ per minute and the exchange efficiency of enthalpy is approximately 60%.

Fig. 6 shows the flows of the air currents and the condition of each unit during the simultaneous feed, exhaust ventilation (non-heat-exchange ventilation). Stop the compressor 9, open the dampers 15, 16, shut the dampers 21, 22, open the shutters 19, 20, and the indoor air which entered the indoor-air circulation wind-passage 6, is sucked outdoors by the blower 3 through the total heat exchanger 14, or the outdoor air, which entered the outdoor-air circulation wind-passage 5 is sucked indoors by the blower 4 through the total heat exchanger 14 thereby to perform the simultaneous feed, exhaust ventilation.

In this case, the total heat exchanger 14 becomes only an air-current passage in construction. Both of the currents are not exchanged in heat within the total-heat exchanger 14 which provide four outlet openings 25, 26, 27, 28 on the side of the outdoor-air circulation wind-passage 5 of the outdoor-air feed wind-passage 12, on the side of the indoor-air circulation wind-passage 6, on the side of the air indoor-air circulation wind-passage 6 of the indoor-air exhaust wind-passage 10, and on the side of the outdoor-air circulation wind-passage 5. In this case, they become short-circuits of both the outdoor-air circulation wind-passage 5 and the indoor-air circulation wind-passage 6.

On the other hand, the dampers 15 and 16 not only open or shut the wind-passages, but also function as controlling plates, which are adapted to vary the air-current sucking direction of the blowers 3 and 4.

Such ventilating functions as described hereinabove are the same as those of the ordinary ventilating fans or wind fans of the simultaneous feeding, exhausting operations. It is to be noted that the ventilation air-amount in the present embodiment is approximately 3 m$^3$ per minute.

As described hereinabove, the heat-pump air conditioner of the present invention can perform its ventilating operation in partial total-heat-exchange even during the cooling, heating operation as compared with the conventional one. The long hours' cooling, heating operations can be effected in a closed room, and the ventilation loss can be controlled to the utmost.

The air conditioning machine can be put into the use as air-condition ventilating fan, simultaneous feed, exhaust ventilating fan, wind fan or the like, in addition to cooling, heating air conditioner. Thus, the energy-saving ventilation, the general ventilation, the open-air cooling, etc. can be performed. It can become a new heat-pump of a wind type, which can be used throughout the year.

Needless to say, the similar effects can be provided with the exception of the total heat exchanging function, even if a sensible heat exchanger of the similar construction, instead of the total heat exchanger in the embodiment, is used.

**Claims**

1. Air conditioning apparatus comprising a box body (x) containing an indoor-air circulation wind-passage (6) provided with an indoor heat exchanger (2) and a blower (4) for circulating the indoor-air, and an outdoor-air circulation wind-passage (5) provided with an outdoor heat exchanger (1) and a blower (3) for circulating the outdoor-air, characterized by (a) a ventilation wind-passage comprising an indoor-air exhaust wind-passage (10) and an outdoor-air feed wind-passage (12), (b) a heat exchanger (14) of opposite flow type which has a first surface facing the indoor-air circulation wind-passage (6), a second surface facing the outdoor-air circulation wind-passage (5) and on each of the surfaces two wind-passage openings (25, 26, 27, 28) are provided at the intersection of the ventilation wind-passages (10, 12), one end of said indoor-air exhaust wind-passage (10) and one end of said outdoor-air feed wind-passage (12) being connected via said heat exchanger (14) of opposite flow type and said wind-passage openings (25, 26, 27, 28) to the middle portions of said indoor-air circulation wind-passage (6) and said outdoor-air circulation wind-passage (5), respectively, and (c) dampers (15, 16) to open or shut said wind-passage openings (25, 26, 27, 28).

2. Air conditioning apparatus according to claim 1, wherein said dampers (15, 16) are adapted to function, respectively, as suction-direction controlling plates for the indoor-air circulating fan (4) and the outdoor-air circulating fan (3).

3. Air conditioning apparatus according to claim 1, wherein said indoor heat exchanger (2) and outdoor heat exchanger (1) form part of a heat pump.

## Patentansprüche

1. Klimagerät mit einem Gehäusekörper (x), der einen Innenluft - Zirkulations - Windkanal (6) mit einem Innen - Wärmetauscher (2) und einem Gebläse (4) zum Zirkulieren der Innenluft und einen Außenluft - Zirkulations - Windkanal (5) mit einem Außen - Wärmetauscher (1) und einem Gebläse zum Zirkulieren der Außenluft enthält, gekennzeichnet durch

a) einen Ventilations - Windkanal, der einen Innenluft - Austritts - Windkanal (10) und einen Außenluft - Zufuhr - Windkanal (12) enthält,

b) einen Wärmetauscher (14) vom Gegenstromtyp, der eine erste, dem Innenluft - Zirkulations - Windkanal (6) gegenüberstehende Oberfläche, eine zweite, dem Außenluft - Zirkulations - Windkanal (5) gegenüberstehende Oberfläche und auf jeder der Oberflächen zwei Windkanalöffnungen (25, 26, 27, 28) an der Schnittlinie der Ventilations - Windkanäle (10, 12) aufweist, wobei ein Ende des Innenluft - Austritts - Windkanals (10) und ein Ende des Außenluft - Zufuhr - Windkanals (12) über den Wärmetauscher (14) vom Gegenstromtyp und die Windkanalöffnungen (25, 26, 27, 28) mit den Mittenabschnitten des Innenluft - Zirkulations - Windkanals (6) bzw. Außenluft - Zirkulations - Windkanals (5) miteinander verbunden sind und

c) Klappen (15, 16) zum Öffnen oder Schließen der Windkanalöffnungen (25, 26, 27, 28).

2. Klimagerät nach Anspruch 1, dadurch gekennzeichnet, daß die Klappen (15, 16) jeweils als Ansaugrichtungs - Steuerplatten für das Innenluft - Zirkulations - Gebläse (4) und das Außenluft - Zirkulations - Gebläse (3) dienen.

3. Klimagerät nach Anspruch 1, dadurch gekennzeichnet, daß der Innen - Wärmetauscher (2) und der Außen - Wärmetauscher (1) Teil einer Wärmepumpe sind.

## Revendications

1. Appareil de conditionnement d'air comprenant un corps (X) en forme de caisson qui contient un passage (6) de circulation d'air interne ayant un échangeur de chaleur (2) interne et un ventilateur (4) destiné à faire circuler l'air interne, et un passage (5) de circulation d'air externe ayant un échangeur de chaleur (1) externe et un ventilateur (3) destiné à faire circuler l'air externe, caractérisé par

(a) un passage de ventilation comprenant un passage (10) d'évacuation d'air interne ut un passage (12) d'alimentation en air externe,

(b) un échangeur de chaleur (14) à contre-courant qui a une première surface tournée vers le passage (6) de circulation d'air interne, une seconde surface tournée vers le passage (5) de circulation d'air externe et, sur chacune des surfaces, deux ouvertures (25, 26, 27, 28) de passage sont formées à l'intersection des passages de ventilation (10, 12), une première extrémité du passage (10) d'évacuation d'air interne et une première extrémité du passage (10) d'évacuation d'air interne et une première extrémité du passage (12) d'alimentation en air externe étant raccordées par l'intermédiare de l'échangeur de chaleur (14) de type à contre-courant et des ouvertures (25, 26, 27, 28) du passage de circulation aux parties médianes du passage (6) de circulation d'air interne et du passage (5) de circulation d'air externe respectivement, et

(c) des registres (15, 16) destinés à ouvrir ou fermer les ouvertures de circulation (25, 26, 27, 28).

2. Appareil de conditionnement d'air selon la revendication 1, dans lequel les registres (15, 16) sont destinés à fonctionner respectivement comme plaques de réglage de la direction d'aspiration du ventilateur de circulation d'air interne (4) et du ventilateur de circulation d'air externe (3).

3. Appareil de conditionnement d'air selon la revendication 1, dans lequel l'échangeur interne de chaleur (2) et l'échangeur externe de chaleur (1) font partie d'une pompe à chaleur.

0 091 643

Fig. 1

Fig. 2

1

*Fig. 3*

*Fig. 4*

Fig. 5

Fig. 6